# EUROPÄISCHE PATENTSCHRIFT

(11) **EP 2 145 747 B1**
(45) Veröffentlichungstag und Bekanntmachung des Hinweises auf die Patenterteilung: **27.02.2013**
(21) Anmeldenummer: 08012858.0
(22) Anmeldetag: 16.07.2008
(51) Int. Cl.: B29C 45/17, B29C 45/73

(54) **Giessvorrichtung und Giessverfahren zur Herstellung hohler Gegenstände mit einem beim Giessvorgang gebildeten Projektil**
Molding device and method for producing hollow objects with a projectile formed during the molding process
Dispositif et procédé de moulage destinés à la fabrication d'objets creux dotés d'un projectile formé lors du processus de moulage

(43) Veröffentlichungstag der Anmeldung: 20.01.2010
(73) Patentinhaber: Röchling Automotive AG & Co. KG, 68165 Mannheim (DE)
(72) Erfinder: Resch, Egon, 39050 Tiers (BZ) (IT); Mosca, Devid, 39051 Bronzolo (IT)
(74) Vertreter: Trossin, Hans-Jürgen

(56) Entgegenhaltungen:
- EP-A- 0 757 936
- JP-A- 10 180 812
- JP-A- 63 143 966
- GRÖNLUND, O.; LETTOWSKY, C.; NEUSS, A.: "Möglichkeiten und Grenzen der Projektilinjektionstechnik" IKV FACHTAGUNG "GAS- UND WASSERINJEKTIONSTECHNIK", 29. November 2007 (2007-11-29), Seiten 1-7, XP007905530 Aachen
- GRÖNLUND, O.; LETTOWSKY, L.; MICHAELI, W.: "Die Geometrie entscheidet" PLASTVERARBEITER, [Online] Februar 2007 (2007-02), Seiten 52-54, XP007905527 Gefunden im Internet: URL:http://imperia.mi-verlag.de/imperia/md /content/ai/pv/fachartikel/pv/2007/02/pv07 _02_052.pdf> [gefunden am 2008-08-26]

## Beschreibung

Die vorliegende Erfindung betrifft eine Gießvorrichtung zur Herstellung hohler Gussgegenstände, umfassend eine Kavität, eine Füllvorrichtung zum Einfüllen von fließfähigem Gießmaterial in die Kavität und eine Verdrängungsvorrichtung, welche dazu ausgebildet ist, ein Projektil zur Bewegung in das in die Kavität eingefüllte Gießmaterial anzutreiben.

Sie betrifft weiterhin ein Gießverfahren, insbesondere Spritzgießverfahren, zur Herstellung hohler Gussgegenstände, umfassend die folgenden Schritte: Einfüllen von fließfähigem Gießmaterial in eine Kavität eines Formwerkzeugs, Antreiben eines Projektils in das in die Kavität eingefüllte fließfähige Gießmaterial hinein, vorzugsweise durch die Kavität hindurch, und dadurch Verdrängen von fließfähigem Gießmaterial in der Kavität, vorzugsweise aus der Kavität hinaus, welches besonders zur Ausführung an der zuvor genannten Gießvorrichtung geeignet ist.

Eine gattungsgemäße Gießvorrichtung sowie ein gattungsgemäßes Gießverfahren sind aus der EP 0 757 936 A bekannt.

Bei dem bekannten Gießverfahren sowie der bekannten Gießvorrichtung ist vor jedem Gießvorgang ein vorgefertigtes Projektil in der Gießform in eine Abschussposition einzulegen. Das Projektil ist nach Abschluss des Gießvorgangs von dem erhaltenen Gießrohling zu trennen und kann anschließend wiederverwendet werden.

Eine weitere gattungsgemäße Gießvorrichtung sowie ein gattungsgemäßes Gießverfahren sind aus der JP10180812 bekannt. Hier werden Projektile zur Verwendung für spätere Gießzyklen während der Herstellung des Gussgegenstandes in Nebenkavitäten direkt mitgegossen, wobei die Nebenkavitäten mit der Kavität des Gussgestandes zur Überleitung der Schmelze verbunden sind.

Nachteilig an den beiden beschriebenen Verfahren ist die durch das Einlegen des Projektils in die offene Gießform bedingte lange Zykluszeit. Dies verringert die Produktivität der bekannten Gießvorrichtung und des bekannten Gießverfahrens gemessen in hergestellten Gussteilen pro Zeiteinheit.

Eine weitere gattungsgemäße Gießvorrichtung sowie ein gattungsgemäßes Gießverfahren, welche diesen Nachteil umgehen, sind aus dem Fachbeitrag "Möglichkeiten und Grenzen der Projektilinjektionstechnik" von Grönlund, O. et al, IKV Fachtagung "Gas- und Wasserinjektionstechnik", Aachen, 29.11.2007, Seite 5, Bild 5, bekannt. Dort wird das Projektil direkt innerhalb der Kavität des Gussgegenstandes bei dessen Herstellung durch den am Fluidinjektor erstarrenden Kunststoff in Form einer Kappe gebildet und anschließend zu Ausformung des Hohlraumes innerhalb dieses Gussgegenstandes verwendet.

Ausgehend hiervon ist es die Aufgabe der vorliegenden Erfindung, eine verbesserte Kontrollierbarkeit der Projektilbildung zu ermöglichen.

Diese Aufgabe wird mittels einer Gießvorrichtung gemäß Anspruch 1 und ein Gießverfahren gemäß Anspruch 14 dadurch gelöst, dass der Projektilabschnitt und der Gegenstandsabschnitt in axialer Richtung, bezogen auf eine Mittelachse des Projektilabschnitts, benachbart angeordnet sind.

Durch die wie oben beschrieben aufgebaute Kavität ist es grundsätzlich möglich, dass das Projektil in dem Formwerkzeug der Giessvorrichtung bei dem Giessvorgang einerseits mit besserer Kontrolierbarkeit gebildet wird. Andererseits ist ein gesondertes Einlegen eines Projektils in das Formwerkzeug bzw. in die Kavität weiterhin nicht notwendig. Die Zykluszeit kann entsprechend verkürzt und die Produktivität dadurch entsprechend erhöht werden.

Aufgrund des im Formwerkzeug der Gießvorrichtung ebenfalls gießtechnisch gebildeten Projektils wird zur Füllung der Kavität der erfindungsgemäßen Gießvorrichtung wenigstens eine um das Projektilvolumen höhere Menge an Gießmaterial benötigt als zur Herstellung des gleichen hohlen Gussgegenstandes mit einer Gießvorrichtung des Standes der Technik.

Ein weiterer Vorteil der erfindungsgemäßen Gießvorrichtung liegt darin, dass das Projektil dann, wenn es aus dem identischen Werkstoff wie der herzustellende Gussgegenstand besteht, nach erfolgtem Gießvorgang nicht mehr von dem überschüssigen Gussmaterial entfernt werden muss, sondern zusammen mit diesem gemahlen, geschreddert oder sonstwie zerkleinert und nach Wiederaufschmelzen erneut einem Gießvorgang zugeführt werden kann.

Grundsätzlich ist denkbar, die Kavität der erfindungsgemäßen Gießvorrichtung mit mehreren Angüssen zu versehen, um ein möglichst schnelles Einfüllen von Gießmaterial in die Kavität gewährleisten zu können. Dabei kann insbesondere ein Anguss für den Gegenstandsabschnitt und ein weiterer Anguss für den Projektilabschnitt vorgesehen sein.

Besonders bevorzugt, weil besonders kostengünstig in der Herstellung, sind der Gegenstandsabschnitt und der Projektilabschnitt durch einen gemeinsamen Anguss mit fließfähigem Gießmaterial befüllbar.

Gemäß einer bevorzugten Ausgestaltung der Kavität der erfindungsgemäßen Gießvorrichtung sind das Projektil und der Gussgegenstand aus demselben Gießmaterial gebildet, insbesondere dann, wenn der Gegenstandsabschnitt und der Projektilabschnitt durch einen gemeinsamen Anguss mit Gießmaterial befüllbar sind. In diesem Falle braucht das Projektil nicht mehr wie im Stand der Technik aus der Menge verdrängten Gießmaterials entfernt zu werden, das nach Entnahme des Gießrohlings üblicherweise mit dem späteren gewünschten hohlen Gussgegenstand verbunden ist und durch Gussputzen von diesem getrennt werden muss. Auch hier findet also eine erhebliche Vereinfachung des aus dem Stand der Technik bekannten Gießverfahrens statt.

Grundsätzlich kann gemäß einer weniger bevorzugten Weiterbildung der Erfindung jedoch auch daran gedacht sein, für den Projektilabschnitt einen eigenen Anguss bereitzustellen, durch welchen zwar Gießmaterial in den Projektilabschnitt einfüllbar ist, jedoch, etwa aus Gründen einer benötigten erhöhten Festigkeit des Projektils, zur Herstellung des Projektils ein von dem Gießmaterial zur Herstellung des hohlen Gussgegenstands abweichendes Gießmaterial verwendet wird, etwa ein mit Fasern oder/und sonstigen Partikeln gefülltes Gießmaterial.

Weiterhin kann daran gedacht sein, zur gießtechnischen Herstellung des Projektils ein Gießmaterial zu verwenden, welches einen höheren Schmelzpunkt aufweist als das zur Herstellung des hohlen Gussgegenstands verwendete Gießmaterial, um eine zeitlich frühere Erstarrung und Verfestigung des Projektils im Gegensatz zum hohlen Gussgegenstand sicherstellen zu können. In den meisten Fällen wird dies jedoch nicht erforderlich sein, da das Projektil eine deutlich geringere Masse als der herzustellende hohle Gussgegenstand aufweisen wird und bereits aus diesem Grunde bei geeigneter Gestaltung des Formwerkzeugs aufgrund des Wärmeübergangs an die umgebende Form schneller abkühlen und erstarren wird.

Bevorzugt stehen der Projektilabschnitt und der Gegenstandsabschnitt zumindest beim Einfüllen von Gießmaterial in die Kavität in Strömungsverbindung miteinander, so dass Gießmaterial, welches in die Kavität eingefüllt wird, von einem Abschnitt in den jeweils anderen Abschnitt fließen kann. Dadurch ist es, wie oben beschrieben, möglich, einen gemeinsamen Anguss für beide Abschnitte zu verwenden.

Es kann jedoch auch daran gedacht sein, den Projektilabschnitt vom Gegenstandsabschnitt abzugrenzen, etwa um im Projektilabschnitt andere Erstarrungsbedingungen bereitstellen zu können als im Gegenstandsabschnitt. Hierzu wird bevorzugt wenigstens ein bewegliches Formteil, besonders bevorzugt eine Mehrzahl beweglicher Formteile, verwendet. Als derartige bewegliche Formteile können Schieber verwendet werden, wie sie im Stand der Technik hinreichend bekannt sind.

Mit "abgrenzbar" soll keine vollständige körperliche Trennung von Projektilabschnitt und Gegenstandsabschnitt bezeichnet sein, wenngleich dies nicht ausgeschlossen ist. Vielmehr soll der Projektilabschnitt bereits dann im Sinne der vorliegenden Anmeldung als vom Gegenstandsabschnitt durch wenigstens ein bewegliches Formteil abgrenzbar gelten, wenn das wenigstens eine bewegliche Formteil in seiner in die Kavität einragenden Formgebungsstellung die genannten Abschnitte erkennbar voneinander trennt, etwa weil durch das wenigstens eine bewegliche Formteil eine erhebliche Durchmesserverringerung, gegebenenfalls bis auf Null, der Kavität erreicht wird.

Selbst wenn durch das wenigstens eine bewegliche Formteil der Projektilabschnitt zur Bildung des Projektils vollständig vom Gegenstandsabschnitt trennbar ist, so ist es funktionsbedingt notwendig, dass das wenigstens eine bewegliche Formteil vor Abschuss des Projektils zurückgezogen wird, um die Bewegungsbahn des Projektils freizugeben. Zumindest in dieser Betriebssituation sind Projektilabschnitt und Gegenstandsabschnitt erkennbar Bestandteile ein und derselben Kavität im Sinne dieser Anmeldung.

Zur Verringerung des Strömungswiderstandes des Projektils beim Eindringen in, vorzugsweise beim Durchgang durch die Kavität ist es vorteilhaft, wenn das Projektil eine möglichst strömungsgünstige Form wenigstens an seinem in Bewegungsrichtung vorauseilenden Längsende aufweist. Zur Ausbildung dieses Längsendes kann in besonders vorteilhafter Weise das wenigstens eine bewegliche Formteil verwendet werden, so dass gemäß einer bevorzugten Weiterbildung der vorliegenden Erfindung das wenigstens eine bewegliche Formteil zur Formgebung eines ersten Längsendbereichs ausgebildet ist, welcher dem in Bewegungsrichtung des Projektils vorauseilenden Längsende näher ist als dessen nachlaufendem Längsende, vorzugsweise das vorauseilende Längsende umfasst.

Ferner umfasst die Gießvorrichtung zum Bewegungsantrieb des Projektils vorteilhafterweise eine Düsenanordnung, welche dazu ausgebildet ist, unter Druck stehendes Fluid auszustoßen. Auch hier kann zur Verringerung der zur Bildung der erfindungsgemäßen Gießvorrichtung benötigten Anzahl an Bauteilen die Düsenanordnung als formgebendes Bauteil verwendet werden, so dass die Düsenanordnung besonders bevorzugt zur Formgebung wenigstens eines Abschnitts eines das in Bewegungsrichtung des Projektils nachlaufende Längsende umfassenden zweiten Längsendbereichs ausgebildet ist.

Da zur Bildung des Gussgegenstands einerseits und zur Bildung des Projektils in ein und demselben Formwerkzeug andererseits unterschiedliche Erstarrungsverhältnisse, insbesondere unterschiedliche Erstarrungsgeschwindigkeiten gewünscht sein können, kann gemäß einer vorteilhaften Weiterbildung der vorliegenden Erfindung vorgesehen sein, dass in einem die Kavität aufweisenden Formwerkzeug eine thermische Isolation derart vorgesehen ist, dass ein den Gegenstandsabschnitt der Kavität aufweisender Gegenstandsbereich des Formwerkzeugs von einem den Projektilabschnitt der Kavität aufweisenden Projektilbereich des Formwerkzeugs zumindest abschnittsweise, vorzugsweise in einer der Kavität nahen Region, thermisch isoliert ist.

In diesem Zusammenhang ist es weiterhin besonders bevorzugt, dass wenigstens eines der beweglichen Formteile mit einer thermischen Isolation versehen ist, zur thermischen Isolation des wenigstens einen beweglichen Formteils gegenüber dem Gegenstandsbereich. Dadurch, dass das wenigstens eine bewegliche Formteil zur Abgrenzung des Projektilabschnitts vom Gegenstandsabschnitt dienen kann, insbesondere dann, wenn das wenigstens eine bewegliche Formteil zur Formgebung des ersten Längsendbereichs des Projektils dient, ist das Vorsehen einer thermischen Isolation an dem wenigstens einem beweglichen Formteil gleichzeitig ein Vorsehen einer thermischen Isolation zwischen dem Projektilbereich und dem Gegenstandsbereich.

Da zum Eindringen des Projektils in, bzw. Durchgang desselben durch den Gegenstandsabschnitt der Kavität funktionsnotwendigerweise das Gießmaterial im Projektilabschnitt zum Zeitpunkt eines Bewegungsbeginns des Projektils in den Gegenstandsabschnitt hinein einen höheren Erstarrungsgrad aufweisen muss als das Gießmaterial im Gegenstandsabschnitt, kann an einer vorteilhaft weitergebildeten Gießvorrichtung vorgesehen sein, dass in dem Projektilbereich des Formwerkzeugs eine Kühleinrichtung zur wenigstens abschnittsweisen Kühlung des Projektilabschnitts vorgesehen ist.

Besonders vorteilhaft ist die Kombination der oben beschriebenen Kühlung mit der weiter oben beschriebenen thermischen Isolation, so dass die Kühlungswirkung aufgrund der thermischen Isolation zwischen Projektilbereich und Gegenstandsbereich im Wesentlichen auf den Projektilbereich beschränkt bleiben kann.

Insbesondere dann, wenn das wenigstens eine bewegliche Formteil zur Formgebung des ersten Längsendbereichs des Projektils verwendet werden kann, ist es von Vorteil, wenn auch wenigstens eines der eventuell mehreren vorhandenen beweglichen Formteile eine Kühleinrichtung aufweist, um gerade das vorauseilende Längsende möglichst schnell erstarren zu lassen.

Grundsätzlich kann daran gedacht sein, den Gegenstandsabschnitt der Kavität nicht vollständig mit Gießmaterial zu füllen, so dass das Projektil bei seinem Eindringen in den Gegenstandsabschnitt zunächst Gießmaterial innerhalb des Gegenstandsabschnitts verdrängt. Um eine vollständige Ausbildung des gewünschten hohlen Gussgegenstandes gewährleisten zu können, kann vorgesehen sein, dass die Gießvorrichtung eine Nebenkavität aufweist, welche mit der Kavität, insbesondere mit deren Gegenstandsabschnitt, in Strömungsverbindung steht oder bringbar ist und welche zur Aufnahme von Gießmaterial ausgebildet ist, das durch das Projektil bei dessen Bewegung in die Kavität hinein, vorzugsweise durch sie hindurch, verdrängt wird. Aufgrund der Nebenkavität kann der Gegenstandsabschnitt immer mit mehr Gießmaterial gefüllt werden als für die Bildung des hohlen Gussgegenstands benötigt wird, wobei überschüssiges Material in die Nebenkavität verdrängt wird. Die Nebenkavität kann entweder dauerhaft oder über ein wahlweise schaltbares Ventil in Strömungsverbindung mit der Kavität stehen.

Grundsätzlich kann die oben beschriebene Gießvorrichtung für beliebige Gießverfahren verwendet werden. Besonders bevorzugt eignet sie sich jedoch zur Anwendung von Spritzgießverfahren, so dass die Gießvorrichtung bevorzugt eine Spritzgießvorrichtung ist, welche thermoplastischen Kunststoff als Gießmaterial verarbeitet.

Die oben zur Erläuterung der erfindungsgemäßen Gießvorrichtung gemachten Ausführungen enthalten auch Verfahrensaspekte, so dass zur Erläuterung des erfindungsgemäßen Gießverfahrens ausdrücklich auf die obigen Ausführungen zur Gießvorrichtung verwiesen wird.

Wie oben bereits im Zusammenhang mit dem wenigstens einen beweglichen Formteil dargelegt wurde, ist es für die Lagestabilität des Projektils während seines Durchgangs durch den Gegenstandsabschnitt sowie zur Verringerung seines Strömungswiderstands hilfreich, wenn der zuvor definierte erste Längsendbereich des Projektils gezielt geformt wird. Hierzu kann das Gießverfahren ein wenigstens teilweises Formen des Projektils durch Schieber sowie ein Zurückziehen der Schieber aus ihrer Formgebungsstellung vor einem Antreiben des Projektils in den Gegenstandsabschnitt hinein umfassen.

Ebenso kann, wie oben bereits beschrieben wurde, das Projektil wenigstens zum Teil, vorzugsweise an dem in Bewegungsbahnrichtung des Projektils nachlaufenden Längsende, durch eine zum Ausstoß von unter Druck stehenden Fluid ausgebildete Düsenanordnung geformt werden.

Nachzutragen ist, dass zwar das Formen des ersten Längsendbereichs des Projektils durch Schieber bevorzugt ist, jedoch keineswegs zwingend notwendig ist. In einer besonders einfachen Ausführungsform der erfindungsgemäßen Gießvorrichtung und des erfindungsgemäßen Gießverfahrens kann auch lediglich Gießmaterial im Projektilabschnitt, etwa aufgrund einer vorhandenen Kühlung, schneller als das in dem an den Projektilabschnitt angrenzenden Gegenstandsabschnitt vorhandene Gießmaterial erstarren und nach ausreichender Erstarrung durch Antriebsmittel, etwa durch die oben genannte Düsenanordnung, zur Bewegung durch den Gegenstandsabschnitt angetrieben werden.

Nachfolgend wird die vorliegende Erfindung anhand von zwei Ausführungbeispielen in den beiliegenden Figuren 1 bis 4 näher erläutert. Es stellt dar:
- Fig. 1: eine schematische Längsschnittsdarstellung eines wesentlichen Abschnitts einer ersten Ausführungsform einer erfindungsgemäßen Gießvorrichtung in Form einer-Spritzgießvorrichtung mit beweglichen Formteilen in ihrer Formgebungsstellung,
- Fig. 2: den Gegenstand von Figur 1 unmittelbar vor Abschuss des Projektils mit in ihre Freigabestellung zurückgezogenen beweglichen Formteilen,
- Fig. 3: den Gegenstand von Figur 1, wobei das Projektil in die Kavität eingedrungen ist, und
- Fig. 4: eine der Ansicht von Figur 1 entsprechende schematische Längsschnittsdarstellung eines wesentlichen Abschnitts einer zweiten Ausführungsform einer erfindungsgemäßen Gießvorrichtung in Form einer Spritzgießvorrichtung ohne bewegliche Formteile.

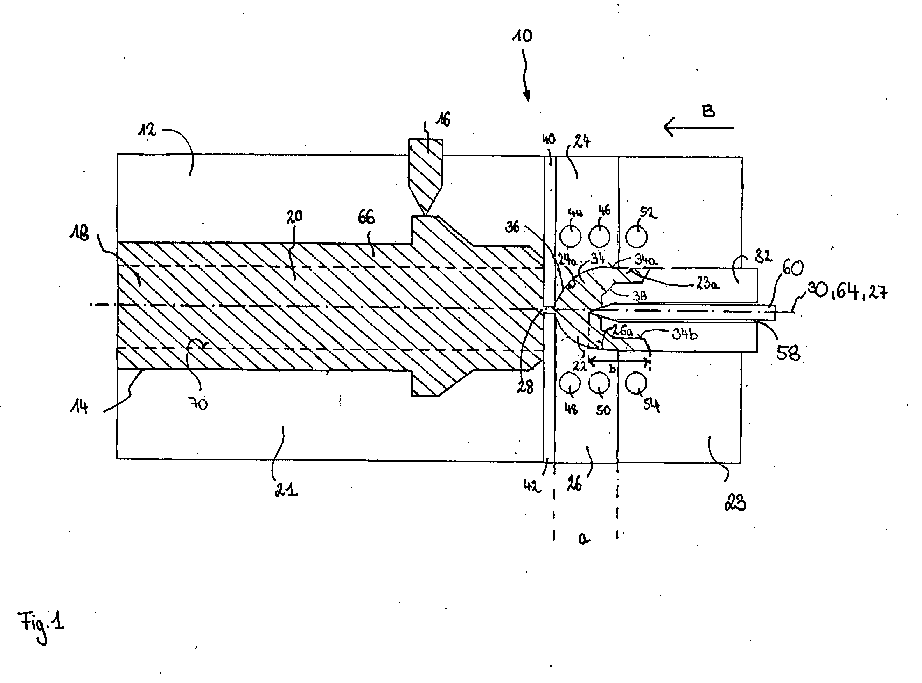

In den Figuren 1 bis 3 ist ein wesentlicher Abschnitt einer erfindungsgemäßen Ausführungsform einer Gießvorrichtung in Form einer Spritzgießvorrichtung allgemein mit 10 bezeichnet. Dargestellt ist ein Teil eines Formwerkzeugs 12 mit einer Kavität 14 in die durch einen Anguss 16 thermoplastischer Kunststoff 18 eingefüllt wurde.

Der mit thermoplastischem Kunststoff 18 ausgefüllte Bereich ist auf allen nachfolgenden Figuren unabhängig von seinem Aggregatszustand bzw. von seiner Viskosität durch Schraffur gekennzeichnet.

Die Kavität 14 umfasst einen Gegenstandsabschnitt 20 und einen Projektilabschnitt 22. Das Formwerkzeug 12 umfasst entsprechend einen Gegenstandsbereich 21 und einen Projektilbereich 23, wobei der Gegenstandsbereich 21 den Gegenstandsabschnitt 20 der Kavität 14 aufweist. Der Projektilbereich 23 des Formwerkzeugs 12 weist den Projektilabschnitt 22 der Kavität 14 auf.

Gegenstandsabschnitt 20 und Projektilabschnitt 22 sind in der in Figur 1 dargestellten ersten Ausführungsform der vorliegenden Erfindung durch bewegliche Formteile 24 und 26 abgegrenzt. In dem in Figur 1 dargestellten Zustand befinden sich die beweglichen Formteile 24 und 26 in einer Formgebungsstellung, in welcher sie so in die Kavität einragen, dass zur Mittelachse 27 des Projektilabschnitts 22 der Kavität 14 hinweisende Formgebungsflächen 24a bzw. 26a der beweglichen Formteile 24 bzw. 26 einen Abschnitt 34a der Außenfläche des im Projektilabschnitt 22 gebildeten Projektils 34 über einen ersten Längsendbereich 36 formgebend gestalten, welcher erster Längsendbereich 36 einem in Bewegungsrichtung B des Projektils 34 in den Gegenstandsabschnitt 20 der Kavität 14 vorauseilenden Längsende des Projektils 34 näher gelegen ist als einem in der genannten Bewegungsrichtung B nachlaufenden Längsende.

Der erste Längsendbereich 36 erstreckt sich dabei in axialer Richtung über die Länge a, welche in dem in den Figuren 1 bis 3 dargestellten ersten Ausführungsbeispiel der axialen Länge der beweglichen Formteile bzw. Schieber 24 und 26 entspricht. Der in axialer Richtung an den ersten Längsendbereich 36 anschließende Bereich der Außenwand des Projektils wird durch einen relativ zum Formwerkzeug 12 unbeweglichen Wandabschnitt 23a des Projektilbereichs 23 des Formwerkzeugs 12 gebildet, welcher sich dann, wenn sich die beweglichen Formteile 24 und 26 in ihrer Formgebungsstellung befinden, möglichst bündig an die Formgebungsflächen 24a bzw. 26a der beweglichen Formteile 24 bzw. 26 anschließt.

Bei der in Figur 1 gezeigten Formgebungsstellung der beweglichen Formteile 24 und 26 verbleibt zwischen dem Gegenstandsabschnitt 20 und dem Projektilabschnitt 22 der Kavität 14 lediglich eine schmale Öffnung 28, mittels welcher der Gegenstandsabschnitt 20 und der Projektilabschnitt 22 in Strömungsverbindung miteinander stehen. Diese durch die beweglichen Formteile 24 und 26 erreichte erhebliche Durchmesserverringerung der Kavität 14 auf den Durchmesser der schmalen Öffnung 28 grenzt in diesem Bereich den Projektilabschnitt 22 vom Gegenstandsabschnitt 20 ab, wenngleich die schmale Öffnung 28 ein gemeinsames Einfüllen von fließfähigem Gießmaterial 18 sowohl in den Gegenstandsabschnitt 20 wie auch in den Projekr tilabschnitt 22 durch den einheitlichen gemeinsamen Anguss 16 ermöglicht.

Eine sich längs einer Düsenanordnungs-Längsachse 30 erstreckende Düsenanordnung 32 ragt in dem in der Figur dargestellten Ausführungsbeispiel auf der Seite des Projektilabschnitts 22 über die Länge b in die Kavität 14 hinein.

In einem zweiten Längsendbereich 38, der das in Bewegungsrichtung B des Projektils 34 nachlaufende Längsende des Projektils umfasst, wird die radial innere Kontur 34b des im Projektilabschnitt 22 zu bildenden Projektils 34 von dem in die Kavität 14, genauer in den Projektilabschnitt 22 hineinragenden Abschnitt der Außenkontur der Düsenanordnung 32 gebildet.

Um unterschiedliche Erstarrungsverhältnisse im Projektilabschnitt 22 einerseits und im Gegenstandsabschnitt 20 andererseits zu gewährleisten, sind der Gegenstandsbereich 21 und der Projektilbereich 23 des Formwerkzeugs 12 mit Isolationselementen 40 und 42 gegeneinander zumindest in dem in den Figuren 1 bis 3 dargestellten kavitätsnahen Bereich thermisch isoliert. Die Isolationselemente 40 und 42 sind dabei an der Seite der beweglichen Formteile 24 und 26 vorgesehen, die dem Gegenstandsbereich 21 des Formwerkzeugs 12 zugewandt ist.

Um weiterhin sicherzustellen, dass das Gießmaterial 18 im Projektilabschnitt 22 erstarrt, während es im Gegenstandsabschnitt 20 der Kavität 14 zunächst fließfähig bleibt, weisen die beweglichen Formteile 24 und 26 darüber hinaus mit Kühlmittel durchströmbare Kühlmittelkanäle 44, 46, 48 und 50 in einem dem Projektilabschnitt 22 nahen Bereich der beweglichen Formteile 24 und 26 auf. Weiterhin sind auch im Projektilbereich 23 des Formwerkzeugs 12 nahe dem Projektilabschnitt 22 der Kavität 14 weitere Kühlmittelkanäle 52 und 54 angebracht.

Dann, wenn in die Kavität 14, also sowohl in den Gegenstandsabschnitt 20 als auch in den Projektilabschnitt 22, die vorbestimmte Menge an fließfähigem Gießmaterial 18 über den Anguss 16 eingefüllt wurde, wird dem Gießmaterial im Projektilabschnitt 22 aufgrund der im Projektilbereich 23 vorgesehenen Kühlmittelkanäle 44, 46, 48, 50, 52 und 54 sowie aufgrund des im Vergleich zum Gegenstandsabschnitt 20 größeren Oberflächen-VolumenVerhältnis pro Massen- und Zeiteinheit mehr Wärme entzogen als dem Gießmaterial in dem in axialer Richtung benachbarten Gegenstandsabschnitt 20, was eine schnellere Erstarrung des Gießmaterials 18 im Projektilabschnitt 22 bewirkt als im Gegenstandsabschnitt 20.

Somit ist dafür gesorgt, dass im Gegenstandsabschnitt 20 zu dem Zeitpunkt, zu welchem das Projektil 34 für eine Bewegung in die Kavität 14, genauer in den Gegenstandsabschnitt 20 hinein ausreichend erstarrt ist, sich im Gegenstandsabschnitt 20 ausreichend fließfähiges Gießmaterial 18 befindet, welches vom dann eindringenden Projektil 34 verdrängt werden kann.

Um dem auf diese Weise gebildeten Projektil 34 eine Bewegung durch das sich im Gegenstandsabschnitt 20 der Kavität 14 befindende fließfähige Gießmaterial 18 in der Bewegungsrichtung B zu ermöglichen, müssen die beweglichen Formteile 24 und 26 inklusive der daran vorgesehenen thermischen Isolationselemente 40 und 42 aus der Formgebungsstellung, die in Figur 1 dargestellt ist, in eine Freigabestellung zurückgezogen werden.

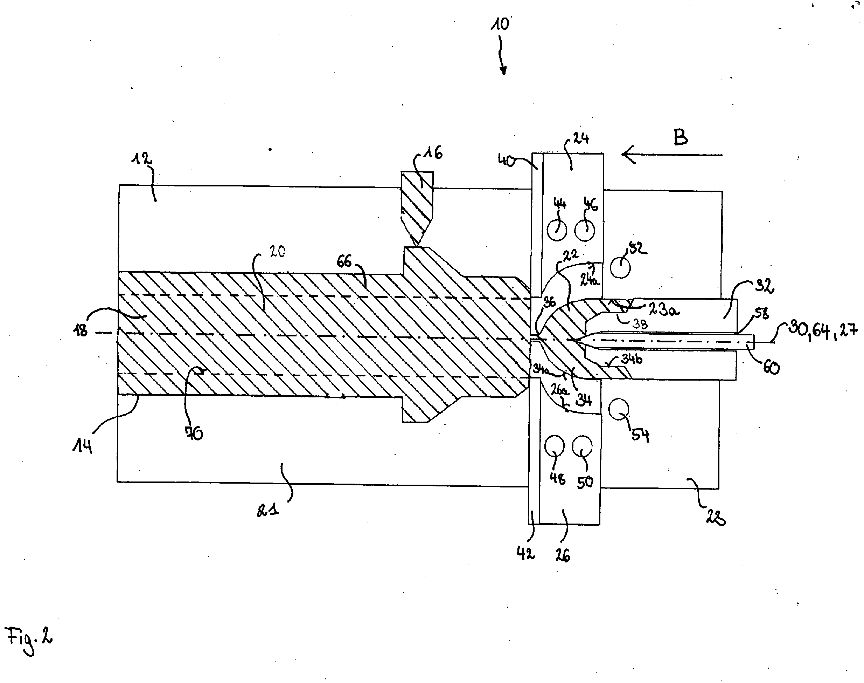

In Figur 2 sind die gleichen Vorrichtungsteile wie in Figur 1 in der gleichen Ansicht dargestellt, wobei sich die beweglichen Formteile 24 und 26 in ihrer Freigabestellung befinden. Gegenüber dem in Figur 1 dargestellten Zustand wurden die beweglichen Formteile 24 und 26 inklusive der daran vorgesehenen thermischen Isolationselemente 40 und 42 von dem Projektil 34 nach außen weg bewegt, so dass die beweglichen Formteile 24 und 26 eine Bewegung des Projektils 34 ausgehend von der in den Figuren 1 und 2 gezeigten Startposition in Bewegungsrichtung B nicht mehr behindern. In der in Figur 2 dargestellten Situation ist ein Fluidzufuhrkanal 58 der Düsenanordnung 32 mit einem Nadelventil 60 verschlossen.

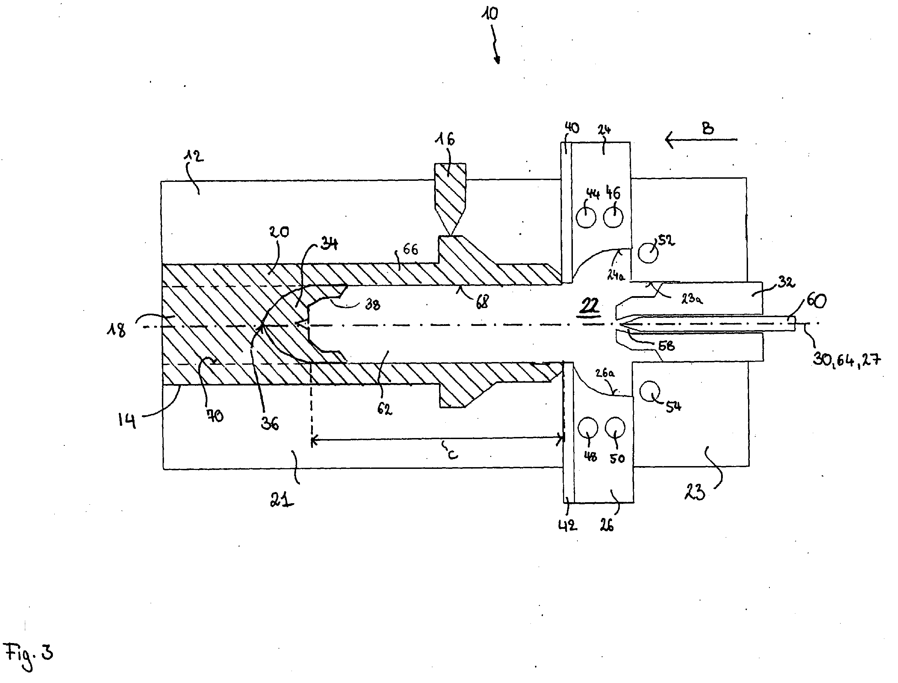

In Figur 3 sind die gleichen Vorrichtungsteile wie in Figur 1 in der gleichen Ansicht dargestellt, nachdem das Nadelventil 60 der Düsenanordnung 32 geöffnet wurde und das Projektil 34 durch ein unter Druck stehendes und aus dem Fluidzufuhrkanal 58 in Richtung B ausgestoßenes Fluid zur Bewegung in Bewegungsrichtung B in den Gegenstandsabschnitt der mit fließfähigem Gießmaterial 18 gefüllten Kavität 14 angetrieben ist.

In der in Figur 3 dargestellten Situation hat das Projektil 34 bei seiner Bewegung in Bewegungsrichtung B bereits über eine Länge c Gießmaterial aus dem Gegenstandsabschnitt 20 verdrängt. Es verbleibt in Bewegungsrichtung B hinter dem Projektil 34 ein Hohlraum 62, der bezogen auf die Längsachse 64 des im Gegenstandsabschnitt zu erzeugenden Rohres 66, welche mit der Düsenanordnungs-Längsachse 30 zusammenfällt, radial innerhalb der Grenzfläche 68 liegt. In Bewegungsrichtung B vor dem Projektil 34 und radial innerhalb der erwarteten Grenzfläche 70 liegendes Gießmaterial 18 wird im Verlauf der weiteren Bewegung des Projektils 34 noch verdrängt werden. Zurück bleibt das radial außerhalb der Grenzflächen 68 und 70 liegende Rohr 66.

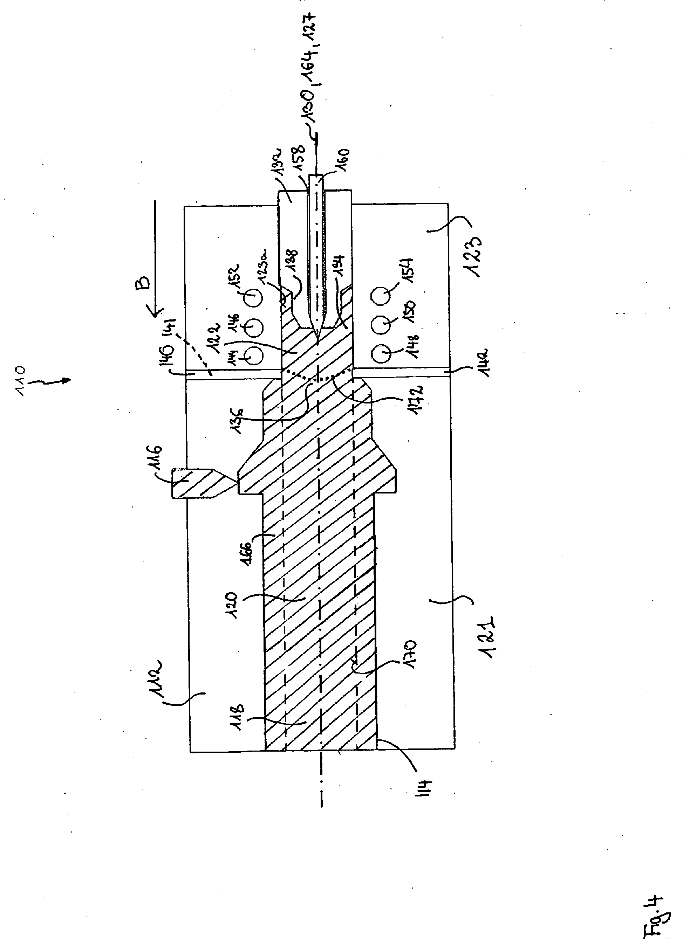

In Figur 4 ist ein wesentlicher Abschnitt einer zweiten erfindungsgemäßen Ausführungsform einer Gießvorrichtung in Form einer Spritzgießvorrichtung dargestellt, die in Figur 4 allgemein mit 110 bezeichnet ist. Generell werden die Bauteile in Figur 4, die funktionsidentisch zu Bauteilen aus dem in den Figuren 1 bis 3 dargestellten ersten Ausführungsbeispiel sind, mit Bezugszeichen versehen, die durch eine Addition der Zahl 100 aus den Bezugszeichen der entsprechenden Bauteile in den Figuren 1 bis 3 hervorgehen. Das in Figur 4 dargestellte Ausführungsbeispiel wird nur insofern diskutiert, als es sich von dem in den Figuren 1 bis 3 dargestellten Ausführungsbeispiel unterscheidet, auf dessen Beschreibung ansonsten ausdrücklich verwiesen wird.

Der wesentliche Unterschied zwischen dem zweiten Ausführungsbeispiel in Figur 4 und dem in den Figuren 1 bis 3 dargestellten ersten Ausführungsbeispiel besteht darin, dass bei dem in Figur 4 dargestellten Ausführungsbeispiel die Form des im Projektilabschnitt 122 zu bildenden Projektils 134 in dem ersten Längsendbereich 136, der das in Bewegungsrichtung B vorauseilende Längsende des Projektils 134 umfasst, nicht durch Formung mit einem entsprechend gestalteten Formwerkzeug, wie etwa den beweglichen Formteilen aus dem in den Figuren 1 bis 3 dargestellten ersten Ausführungsbeispiel, bestimmt wird.

In einer Ebene des Formwerkzeugs 112 sind thermische Isolationselemente 140 und 142 vorgesehen, die den Projektilbereich 123 und den Gegenstandsbereich 121 des Formwerkzeugs 112 gegeneinander thermisch isolieren und räumlich abgrenzen, so dass Gegenstandsabschnitt 120 und Projektilabschnitt 122 der Kavität 114 trotz des Fehlens von in die Kavität hineinragenden beweglichen Formteilen deutlich zu unterscheiden sind.

Die Form des Projektils 134 im ersten Längsendbereich 136 stellt sich aufgrund der thermischen Gegebenheiten im Grenzbereich zwischen Gegenstandsabschnitt 120 und Projektilabschnitt 122 der Kavität 114 ein, wobei in Figur 4 eine mögliche Form des Projektils 134 in diesem ersten Längsendbereich 136 durch die punktierte Fläche 172 angedeutet ist.

Da die lsolationselemente 140 und 142 in diesem Ausführungsbeispiel im Formwerkzeug 112 unbeweglich, insbesondere nicht relativ zueinander beweglich, aufgenommen sind, kann in diesem Fall die thermische Isolierung zwischen Gegenstandsbereich 121 und Projektilbereich 123 auch durch ein einstückig ausgebildetes Isolationselement 141 erfolgen.

## Patentansprüche

1. Gießvorrichtung (10; 110) zur Herstellung eines hohlen Gussgegenstands, umfassend:
- eine Kavität (14; 114),
- eine Füllvorrichtung (16; 116) zum Einfüllen von fließfähigem Gießmaterial (18; 118) in die Kavität (14; 114),
- eine Verdrängungsvorrichtung (32; 132), welche dazu ausgebildet ist, ein Projektil (34; 134) zur Bewegung in das in die Kavität (14; 114) eingefüllte Gießmaterial (18; 118) anzutreiben,
wobei die Kavität (14; 114) einen Gegenstandsabschnitt (20; 120) aufweist, welcher dem zu erzeugenden Gussgegenstand (66; 166) zugeordnet ist und in welchem dieser gebildet wird, und einen Projektilabschnitt (22; 122) aufweist, welcher dem Projektil (34; 134) zugeordnet ist und in welchem dieses gebildet wird,
**dadurch gekennzeichnet, dass** der Projektilabschnitt (22, 122) und der Gegenstandsabschnitt (20; 120) in axialer Richtung, bezogen auf eine Mittelachse (27) des Projektilabschnitts (22; 122), benachbart angeordnet sind.

2. Gießvorrichtung (10; 110) nach Anspruch 1,
**dadurch gekennzeichnet, dass** der Projektilabschnitt (22; 122) in einer Bewegungsrichtung (B) des Projektils (34; 134) betrachtet, vor dem Gegenstandsabschnitt (20; 120) angeordnet ist.

3. Gießvorrichtung (10; 110) nach Anspruch 1 oder 2,
**dadurch gekennzeichnet, dass** der Gegenstandsabschnitt (20; 120) und der Projektilabschnitt (22; 122) durch einen gemeinsamen Anguss (16; 116) mit fließfähigem Gießmaterial (18; 118) befüllbar sind.

4. Gießvorrichtung (10; 110) nach einem der vorhergehenden Ansprüche,
**dadurch gekennzeichnet, dass** das Projektil (34; 134) und der Gussgegenstand (66; 166) aus demselben Gießmaterial (18; 118) gebildet sind.

5. Gießvorrichtung (10) nach einem der vorhergehenden Ansprüche,
**dadurch gekennzeichnet, dass** der Projektilabschnitt (22) vom Gegenstandsabschnitt (20) durch wenigstens ein bewegliches Formteil (24, 26), wie etwa einen Schieber, abgrenzbar ist.

6. Gießvorrichtung (10) nach Anspruch 5,
**dadurch gekennzeichnet, dass** das wenigstens eine bewegliche Formteil (24, 26) zur Formgebung eines dem in Bewegungsrichtung (B) des Projektils (34) vorauseilenden Längsende näheren, vorzugsweise dieses Längsende umfassenden ersten Längsendbereichs (36) des Projektils (34) ausgebildet ist.

7. Gießvorrichtung (10; 110) nach einem der vorhergehenden Ansprüche,
**dadurch gekennzeichnet, dass** sie eine Düsenanordnung (32; 132) umfasst, welche dazu ausgebildet ist, unter Druck stehendes Fluid zum Bewegungsantrieb des Projektils (34; 134) auszustoßen, wobei die Düsenanordnung (32; 132) zur Formgebung wenigstens eines Abschnitts eines das in Bewegungsrichtung (B) des Projektils (34; 134) nachlaufende Längsende umfassenden zweiten Längsendbereichs (38; 138) des Projektils ausgebildet ist.

8. Gießvorrichtung (10; 110) nach einem der vorhergehenden Ansprüche,
**dadurch gekennzeichnet, dass** in einem die Kavität (14; 114) aufweisenden Formwerkzeug (12; 112) eine thermische Isolation (40, 42; 140, 142) derart vorgesehen ist, dass ein den Gegenstandsabschnitt (20; 120) der Kavität (14; 114) aufweisender Gegenstandsbereich (21; 121) des Formwerkzeugs (12; 112) von einem den Projektilabschnitt (22; 122) der Kavität (14; 114) aufweisenden Projektilbereich (23; 123) des Formwerkzeugs (12; 112) zumindest abschnittsweise, vorzugsweise in einer der Kavität (14; 114) nahen Region, thermisch isoliert ist.

9. Gießvorrichtung (10) nach Anspruch 5 oder 6, jeweils in Kombination mit Anspruch 8,
**dadurch gekennzeichnet, dass** wenigstens eines der beweglichen Formteile (24, 26) mit einer thermischen Isolation (40, 42) versehen ist, zur thermischen Isolation des wenigstens einen beweglichen Formteils (24, 26) gegenüber dem Gegenstandsbereich (21).

10. Gießvorrichtung (10; 110) nach einem der vorhergehenden Ansprüche,
**dadurch gekennzeichnet, dass** ein die Kavität (14; 114) aufweisendes Formwerkzeug (12; 112) einen den Gegenstandsabschnitt (20; 120) der Kavität (14; 114) aufweisenden Gegenstandsbereich (21; 121) und einen den Projektilabschnitt (22; 122) der Kavität (14; 114) aufweisenden Projektilbereich (23; 123) umfasst, wobei in dem Projektilbereich (23; 123) eine Kühleinrichtung (44, 46, 48, 50, 52, 54; 144, 146, 148, 150, 152, 154) zur wenigstens abschnittsweisen Kühlung des Projektilabschnitts (22; 122) vorgesehen ist.

11. Gießvorrichtung (10) nach Anspruch 5 und 10, insbesondere unter Einbeziehung wenigstens eines der Ansprüche 6 bis 9,
**dadurch gekennzeichnet, dass** wenigstens eines der beweglichen Formteile (24, 26) eine Kühleinrichtung (44, 46, 48, 50) aufweist.

12. Gießvorrichtung (10; 110) nach einem der vorhergehenden Ansprüche,
**dadurch gekennzeichnet, dass** sie eine Nebenkavität aufweist, welche mit der Kavität (14; 114), insbesondere mit deren Gegenstandsabschnitt (20; 120), in Strömungsverbindung steht oder bringbar ist und welche zur Aufnahme von Gießmaterial (18; 118) ausgebildet ist, das durch das Projektil (34; 134) bei dessen Bewegung in die Kavität (14; 114) hinein, vorzugsweise durch sie hindurch, verdrängt wird.

13. Gießvorrichtung (10; 110) nach einem der vorhergehenden Ansprüche,
**dadurch gekennzeichnet, dass** sie eine Spritzgießvorrichtung ist mit thermoplastischem Kunststoff als Gießmaterial.

14. Gießverfahren, insbesondere Spritzgießverfahren, zur Herstellung eines hohlen Gussgegenstands (66; 166), umfassend die folgenden Schritte:
- Einfüllen von fließfähigem Gießmaterial (18; 118) in eine Kavität (14; 114) eines Formwerkzeugs (12; 112),
- Antreiben eines Projektils (34; 134) in das in die Kavität (14; 114) eingefüllte fließfähige Gießmaterial (18; 118) hinein, vorzugsweise durch die Kavität (14; 114) hindurch, dadurch
- Verdrängen von fließfähigem Gießmaterial (18; 118) in der Kavität (14; 114), vorzugsweise aus der Kavität (14; 114) hinaus, wobei
die Kavität (14; 114) einen Gegenstandsabschnitt (20; 120) aufweist, welcher dem zu erzeugenden Gussgegenstand (66; 166) zugeordnet ist und in welchem dieser gebildet wird, und einen Projektilabschnitt (22; 122) aufweist, welcher dem Projektil (34; 134) zugeordnet ist und in welchem dieses gebildet wird und wobei das Gießverfahren nach dem Einfüllen von Gießmaterial (18; 118), jedoch vor dem Antreiben des Projektils (34; 134), zusätzlich folgenden Schritt umfasst:
- Abkühlen des Projektilabschnitts (22; 122) und dadurch
- Bilden des Projektils (34; 134) in der Kavität (14; 114),
**dadurch gekennzeichnet, dass** der Projektilabschnitt (22; 122) und der Gegenstandsabschnitt (20; 120) in axialer Richtung, bezogen auf eine Mittelachse (27) des Projektilabschnitts (22; 122), benachbart angeordnet sind.

15. Gießverfahren nach Anspruch 14,
**dadurch gekennzeichnet, dass** beim Antreiben des Projektils (34; 134) dieses zu einer Bewegung aus dem Projektilabschnitt (22; 122) und in den Gegenstandsabschnitt (20; 120) hinein angetrieben wird.

16. Gießverfahren nach Anspruch 14 oder 15,
**dadurch gekennzeichnet, dass** das Projektil (34) wenigstens zum Teil, vorzugsweise an dem in Bewegungsrichtung (B) des Projektils (34) vorauseilenden Längsende (36) durch Schieber (24, 26) geformt wird und das Verfahren vor dem Antreiben des Projektils (34) ein Zurückziehen der Schieber (24, 26) aus ihrer Formgebungsstellung umfasst.

17. Gießverfahren nach einem der Ansprüche 14 bis 16,
**dadurch gekennzeichnet, dass** das Projektil (34; 134) wenigstens zum Teil, vorzugsweise an dem in Bewegungsrichtung (B) des Projektils (34; 134) nachlaufenden Längsende (38; 138), durch eine zum Ausstoß von unter Druck stehendem Fluid ausgebildete Düsenanordnung (32; 132) geformt wird.

## Claims

1. Moulding device (10; 110) for manufacturing a hollow moulded object, comprising:
- a cavity (14; 114),
- a filling device (16; 116) for filling the cavity (14; 114) with free-flowing moulding material (18; 118),
- a displacement device (32; 132) which is configured to drive a projectile (34; 134) to move into the moulding material (18; 118) with which the cavity (14; 114) is filled,
the cavity (14; 114) comprising an object portion (20; 120) which is associated with the moulded object (66; 166) to be created, said object being formed therein, and comprising a projectile portion (22; 122) which is associated with the projectile (34; 134), said projectile being formed therein, **characterised in that** the projectile portion (22, 122) and the object portion (20; 120) are arranged adjacent to each other in the axial direction, relative to a central axis (27) of the projectile portion (22; 122).

2. Moulding device (10; 110) according to claim 1, **characterised in that** the projectile portion (22; 122), viewed in a direction of movement (B) of the projectile (34; 134), is arranged in front of the object portion (20; 120).

3. Moulding device (10; 110) according to either claim 1 or claim 2, **characterised in that** the object portion (20; 120) and the projectile portion (22; 122) can be filled with free-flowing moulding material (18; 118) by a common gate (16; 116).

4. Moulding device (10; 110) according to any of the preceding claims, **characterised in that** the projectile (34; 134) and the moulded object (66; 166) are made of the same moulding material (18; 118).

5. Moulding device (10) according to any of the preceding claims, **characterised in that** the projectile portion (22) of the object portion (20) can be delimited by at least one movable mould part (24, 26) such as a mould slide.

6. Moulding device (10) according to claim 5, **characterised in that** the at least one movable mould part (24, 26) is configured to mould a first longitudinal end region (36) of the projectile (34) which is relatively close to the longitudinal end that extends ahead in the direction of movement (B) of the projectile (34), preferably surrounding said longitudinal end.

7. Moulding device (10; 110) according to any of the preceding claims, **characterised in that** it comprises a nozzle arrangement (32; 132) which is configured to emit pressurised fluid to movably drive the projectile (34; 134), the nozzle arrangement (32; 132) being configured to mould at least one portion of a second longitudinal end region (38; 138) of the projectile surrounding the longitudinal end that extends behind in the direction of movement (B) of the projectile (34; 134).

8. Moulding device (10; 110) according to any of the preceding claims, **characterised in that** thermal insulation (40, 42; 140, 142) is provided in a moulding tool (12; 112) comprising the cavity (14; 114) such that an object region (21; 121) of the moulding tool (12; 112) comprising the object portion (20; 120) of the cavity (14; 114) is thermally insulated from a projectile region (23; 123) of the moulding tool (12; 112) comprising the projectile portion (22; 122) of the cavity (14; 114), at least in portions, preferably in a region close to the cavity (14; 114).

9. Moulding device (10) according to either claim 5 or claim 6, each in combination with claim 8, **characterised in that** at least one of the movable mould parts (24, 26) is provided with thermal insulation (40, 42) to thermally insulate the at least one movable mould part (24, 26) from the object region (21).

10. Moulding device (10; 110) according to any of the preceding claims, **characterised in that** a moulding tool (12; 112) comprising the cavity (14; 114) has an object region (21; 121) comprising the object portion (20; 120) of the cavity (14; 114) and a projectile region (23; 123) comprising the projectile portion (22; 122) of the cavity (14; 114), a cooling means (44, 46, 48, 50, 52, 54; 144, 146, 148, 150, 152, 154) being provided in the projectile region (23; 123) to cool the projectile portion (22; 122), at least in portions.

11. Moulding device (10) according to claims 5 and 10, in particular including at least one of claims 6 to 9, **characterised in that** at least one of the movable mould parts (24, 26) comprises a cooling means (44, 46, 48, 50).

12. Moulding device (10; 110) according to any of the preceding claims, **characterised in that** it comprises an overflow cavity which is fluidly connected or connectable to the cavity (14; 114), in particular to the object portion (20; 120) thereof, and can be configured to receive moulding material (18; 118) which is displaced by the projectile (34; 134) when it moves into the cavity (14; 114), preferably through the cavity.

13. Moulding device (10; 110) according to any of the preceding claims, **characterised in that** it is an injection moulding device comprising a thermoplastic as moulding material.

14. Moulding method, in particular an injection moulding method, for manufacturing a hollow moulded object (66; 166), comprising the following steps:
- filling a cavity (14; 114) of a moulding tool (12; 112) with free-moulding moulding material (18; 118),
- driving a projectile (34; 134) into the free-moulding moulding material (18; 118) with which the cavity (14; 114) is filled, preferably through the cavity (14; 114), thereby
- displacing free-moulding moulding material (18; 118) in the cavity (14; 114), preferably out of the cavity (14; 114),
the cavity (14; 114) comprising an object portion (20; 120) which is associated with the moulded object (66; 166) to be created, said object being formed therein, and comprising a projectile portion (22; 122) which is associated with the projectile (34; 134), said projectile being formed therein, the moulding method, after filling the cavity with moulding material (18; 118), but before driving the projectile (34; 134), additionally comprising the following step:
- cooling the projectile portion (22; 122) and thereby
- forming the projectile (34; 134) in the cavity (14; 114),
**characterised in that** the projectile portion (22; 122) and the object portion (20; 120) are arranged adjacent to each other in the axial direction, relative to a central axis (27) of the projectile portion (22; 122).

15. Moulding method according to claim 14, **characterised in that** when driving the projectile (34; 134), it is driven to move out of the projectile portion (22; 122) and into the object portion (20; 120).

16. Moulding method according to either claim 14 or claim 15, **characterised in that** the projectile (34) is moulded, at least in part, by a mould slide (24, 26) preferably at the longitudinal end (36) that extends ahead in the direction of movement (B) of the projectile (34) and the method includes pulling the mould slide (24, 26) out of its moulding position before driving the projectile (34).

17. Moulding method according to any of claims 14 to 16, **characterised in that** the projectile (34; 134) is moulded, at least in part, by a nozzle arrangement (32; 132) which is configured to emit pressurised fluid, preferably at the longitudinal end (38; 138) that extends behind in the direction of movement (B) of the projectile (34; 134).

## Revendications

1. Dispositif de moulage (10; 110) pour la fabrication d'un objet moulé creux, comprenant:
- une cavité (14; 114);
- un dispositif de remplissage (16; 116) pour verser un matériau de moulage fluide (18; 118) dans la cavité (14; 114) ;
- un dispositif de déplacement (32; 132), qui est conçu pour entraîner un projectile (34; 134) à se déplacer dans le matériau de moulage (18; 118) versé dans la cavité (14; 114);
dans lequel la cavité (14; 114) présente une partie d'objet (20; 120), qui est associée à l'objet moulé à produire (66; 166) et dans laquelle celui-ci est formé, et présente une partie de projectile (22; 122), qui est associée au projectile (34; 134) et dans laquelle celui-ci est formé, **caractérisé en ce que** la partie de projectile (22; 122) et la partie d'objet (20; 120) sont disposées à proximité l'une de l'autre en direction axiale, par rapport à un axe central (27) de la partie de projectile (22; 122).

2. Dispositif de moulage (10; 110) selon la revendication 1, **caractérisé en ce que** la partie de projectile (22; 122), considérée dans une direction de déplacement (B) du projectile (34; 134), est disposée avant la partie d'objet (20; 120).

3. Dispositif de moulage (10; 110) selon la revendication 1 ou 2, **caractérisé en ce que** la partie d'objet (20; 120) et la partie de projectile (22; 122) peuvent être remplies de matériau de moulage fluide (18; 118) par une amorce de coulée commune (16; 116).

4. Dispositif de moulage (10; 110) selon l'une quelconque des revendications précédentes, **caractérisé en ce que** le projectile (34; 134) et l'objet moulé (66; 166) sont formés du même matériau de moulage (18; 118).

5. Dispositif de moulage (10) selon l'une quelconque des revendications précédentes, **caractérisé en ce que** la partie de projectile (22) peut être délimitée par rapport à la partie d'objet (20) par au moins une pièce de forme mobile (24, 26), comme par exemple un coulisseau.

6. Dispositif de moulage (10) selon la revendication 5, **caractérisé en ce que** ladite au moins une pièce de forme (24, 26) est conçue pour façonner une première région d'extrémité longitudinale (36) du projectile (34) plus proche de l'extrémité longitudinale antérieure dans la direction de déplacement (B) du projectile (34), de préférence entourant cette extrémité longitudinale.

7. Dispositif de moulage (10; 110) selon l'une quelconque des revendications précédentes, **caractérisé en ce qu'**il comprend un ensemble de buse (32; 132), qui est conçu pour éjecter un fluide sous pression pour l'entraînement du déplacement du projectile (34; 134), dans lequel l'ensemble de buse (32; 132) est conçu pour le façonnage d'au moins une partie d'une deuxième région d'extrémité longitudinale (38; 138) du projectile entourant l'extrémité longitudinale postérieure dans la direction de déplacement (B) du projectile (34; 134).

8. Dispositif de moulage (10; 110) selon l'une quelconque des revendications précédentes, **caractérisé en ce qu'**il est prévu, dans un outil de formage (12; 112) présentant la cavité (14; 114), une isolation thermique (40, 42; 140, 142) de telle manière qu'une région d'objet (21; 121) de l'outil de formage (12; 112) présentant la partie d'objet (20; 120) de la cavité (14; 114) soit thermiquement isolée au moins localement, de préférence dans une région proche de la cavité (14; 114), d'une région de projectile (23; 123) de l'outil de formage (12; 112) présentant la partie de projectile (22; 122) de la cavité (14; 114).

9. Dispositif de moulage (10) selon la revendication 5 ou 6, chaque fois en combinaison avec la revendication 8, **caractérisé en ce qu'**au moins une des pièces de forme mobiles (24, 26) est munie d'une isolation thermique (40, 42), afin d'isoler thermiquement ladite au moins une pièce de forme mobile (24, 26) par rapport à la région d'objet (21).

10. Dispositif de moulage (10; 110) selon l'une quelconque des revendications précédentes, **caractérisé en ce qu'**un outil de formage (12; 112) présentant la cavité (14; 114) comprend une région d'objet (21; 121) présentant la partie d'objet (20; 120) de la cavité (14; 114) et une région de projectile (23; 123) présentant la partie de projectile (22; 122) de la cavité (14; 114), dans lequel il est prévu, dans la région de projectile (23; 123), un dispositif de refroidissement (44, 46, 48, 50, 52, 54; 144, 146, 148, 150, 152, 154) pour le refroidissement au moins local de la partie de projectile (22; 122).

11. Dispositif de moulage (10) selon la revendication 5 et 10, en particulier en tenant compte d'au moins une des revendications 6 à 9, **caractérisé en ce qu'**au moins une des pièces de forme mobiles (24, 26) présente un dispositif de refroidissement (44, 46, 48, 50).

12. Dispositif de moulage (10; 110) selon l'une quelconque des revendications précédentes, **caractérisé en ce qu'**il présente une cavité secondaire, qui se trouve ou qui peut être mise en communication d'écoulement avec la cavité (14; 114), en particulier avec sa partie d'objet (20; 120), et qui est conçue pour recevoir du matériau de moulage (18; 118), qui est déplacé par le projectile (34; 134), lors de son déplacement, dans la cavité (14; 114), de préférence à travers celle-ci.

13. Dispositif de moulage (10; 110) selon l'une quelconque des revendications précédentes, **caractérisé en ce qu'**il est un dispositif de moulage par injection avec un matériau synthétique thermoplastique comme matériau de moulage.

14. Procédé de moulage, en particulier procédé de moulage par injection, pour la fabrication d'un objet moulé creux (66; 166), comprenant les étapes suivantes:
- verser du matériau de moulage fluide (18; 118) dans une cavité (14; 114) d'un outil de formage (12; 112),
- entraîner un projectile (34; 134) dans le matériau de moulage fluide (18; 118) versé dans la cavité (14; 114), de préférence à travers la cavité (14; 114), et ainsi
- déplacer du matériau de moulage fluide (18; 118) dans la cavité (14; 114), de préférence au-delà de la cavité (14; 114),
dans lequel la cavité (14; 114) présente une partie d'objet (20; 120), qui est associée à l'objet moulé à produire (66; 166) et dans laquelle celui-ci est formé, et présente une partie de projectile (22; 122), qui est associée au projectile (34; 134) et dans laquelle celui-ci est formé, et dans lequel le procédé de moulage comprend en plus, après le versage de matériau de moulage (18; 118) mais avant l'entraînement du projectile (34; 134), les étapes suivantes:
- refroidir la partie de projectile (22; 122) et ainsi
- former le projectile (34; 134) dans la cavité (14; 114),
**caractérisé en ce que** la partie de projectile (22; 122) et la partie d'objet (20; 120) sont disposées à proximité l'une de l'autre en direction axiale, par rapport à un axe central (27) de la partie de projectile (22; 122).

15. Procédé de moulage selon la revendication 14, **caractérisé en ce que**, lors de l'entraînement du projectile (34; 134), celui-ci est entraîné en un déplacement hors de la partie de projectile (22; 122) et dans la partie d'objet (20; 120).

16. Procédé de moulage selon la revendication 14 ou 15, **caractérisé en ce que** le projectile (34) est formé au moins en partie, de préférence à l'extrémité longitudinale antérieure (36) dans la direction de déplacement (B) du projectile (34), par des coulisseaux (24, 26) et le procédé comprend, avant l'entraînement du projectile (34), un retrait des coulisseaux (24, 26) hors de leur position de formage.

17. Procédé de moulage selon l'une quelconque des revendications 14 à 16, **caractérisé en ce que** le projectile (34; 134) est formé au moins en partie, de préférence à l'extrémité longitudinale (38; 138) postérieure dans la direction de déplacement (B) du projectile (34; 134), par un ensemble de buse (32; 132) conçu pour l'éjection d'un fluide se trouvant sous pression.
